# EUROPÄISCHE PATENTSCHRIFT

(11) **EP 1 159 144 B1**
(45) Veröffentlichungstag und Bekanntmachung des Hinweises auf die Patenterteilung: **02.05.2003**
(21) Anmeldenummer: 00909218.0
(22) Anmeldetag: 19.02.2000
(51) Int. Cl.: B44C 5/04, B29C 70/68

(54) **VERFAHREN ZUR HERSTELLUNG EINES VERKLEIDUNGSTEILS VON BRUCHGEFÄHRDETEM MATERIAL**
METHOD FOR THE PRODUCTION OF A COVERING ELEMENT FOR POTENTIALLY BREAKABLE MATERIAL
PROCEDE DE FABRICATION D'UN ELEMENT DE REVETEMENT COMPORTANT UNE MATIERE SUJETTE A LA RUPTURE

(30) Priorität: 05.03.1999 DE 19909642
(43) Veröffentlichungstag der Anmeldung: 05.12.2001
(73) Patentinhaber: DaimlerChrysler AG, 70567 Stuttgart (DE); Rochus Jogerst GmbH, 77704 Oberkirch (DE)
(72) Erfinder: SPÖRLE, Frank, D-71229 Leonberg (DE); WALTER, Michael, D-77704 Oberkirch/Baden (DE); WARMUTH, Anita Pebble Bay Condominium, Singapore 436918 (SG)
(86) Internationale Anmeldenummer: EP0001376
(87) Internationale Veröffentlichungsnummer: WO00053433

(56) Entgegenhaltungen:
- DE-A- 1 948 663
- GB-A- 2 305 148
- US-A- 4 923 539
- US-A- 5 078 815

## Beschreibung

Die Erfindung betrifft ein Verfahren zur Herstellung eines Verkleidungsteils für Dekorationszwecke nach der im Oberbegriff von Anspruch 1 näher definierten Art. Weiterhin betrifft die Erfindung ein durch das Verfahren hergestelltes Verkleidungsteil.

Ein gattungsgemäßes Verfahren und ein entsprechendes Verkleidungsteil sind aus der GB-A-2305148 bekannt. Dabei werden Schichten von Naturstein, die typischerweise zwischen 4 bis 7 mm stark sind, zusammen mit Trägermaterialien auf ein Formteil aufgelegt und mittels Vakuumtechnik miteinander verklebt.

Aus der DE 296 04 026 U1 ist ein Gebrauchsgegenstand mit im wesentlichsten flächenhafter Erstreckung und einer Front- oder Abdeckschicht aus einem spröden, in dünner Schicht bruchgefährdetem, natürlichen, insbesondere aus einem Stein oder steinartigen Werkstoff beschrieben. Dabei ist die Front- oder Abdeckschicht auf einer Trägerschicht aus einem faserverstärkten Werkstoff mit einer Kunststoffmatrix angeordnet. Der Gebrauchsgegenstand ist als Verkleidungsteil für Dekorationszwecke jedoch nur eingeschränkt einsetzbar, da er durch seine im wesentlichen flächenhafte Erstreckung den Einsatz für in ihrer Fläche dreidimensional gekrümmte Verkleidungsteile nicht ermöglicht.

In der DE 297 12 329 U1 ist ein dreidimensional gekrümmtes Formteil aus Verbundmaterial beschrieben, in welchem die Dekorelemente aus Fasern oder einer Fasermatte bestehen. Die Formgebung des in drei Raumrichtungen gekrümmten Teiles werden durch ein durch Tiefziehen hergestelltes Formteil vorgegeben. Bei diesem Verfahren ist jedoch der Einsatz eines spröden, in dünner Schicht bruchgefährdeten Materials nicht möglich.

Auch die DE 39 30 603 A1 zeigt ein Verkleidungsteil bzw. ein Verfahren zu dessen Herstellung, wobei das Verkleidungsteil eine in drei Raumrichtungen gekrümmte Oberflächenform aufweist. Dabei wird die endgültige Form durch zwei der Formgebung dienende Werkstückformen, einer Oberform und einer Unterform, durch Einlegen und Aushärten in diesen Formen hergestellt. Als dekorative Einlagen lassen sich damit nur biegeweiche Materialien verwenden. Der Einsatz eines spröden, in dünner Schicht bruchgefährdeten Materials, wie z.B. Naturstein, ist aufgrund der zur Formgebung erforderlichen Durchbiegung des Materials der dekorativen Einlage unmöglich.

In einer nicht vorveröffentlichten Schrift ist ein gattungsgemäßes Verkleidungsteil für Dekorationszwecke, insbesondere im Innenbereich und hier bevorzugt für die Innenverkleidung von Fahrgasträumen von Fahrzeugen, beschrieben, bei dem auf der Sichtseite eines Basisteiles eine dekorative Deckschicht aus einem Naturstoff, hier insbesondere Naturstein, aufgebracht ist. Die dekorative Natursteinschicht läßt sich bei diesem Verfahren in beliebiger dreidimensionaler Form realisieren. Dazu wird unter hohem Materialeinsatz des Naturstoffes die gewünschte, endgültige Oberflächenform durch Fräsen aus einem Vollmaterial hergestellt. Die gefräste Schicht wird dabei auf einem Trägerelement gehalten, auf welchem sie im späteren Einsatz verbleibt. Das Verfahren ermöglicht eine hohe gestalterische Freiheit, weist jedoch den gravierenden Nachteil langer Bearbeitungszeiten und eines hohen Materialeinsatzes auf.

Es ist daher Aufgabe der Erfindung, ein Verfahren zur Herstellung eines Verkleidungsteils für Dekorationszwecke, insbesondere für die Gestaltung von Innen- und/oder Außenverkleidungsteilen bei Kraftfahrzeugen, mit einer Zierschicht aus einem anorganischen und/oder kristallinen Material, welches in dünner Schicht bruchgefährdet ist, zu schaffen, bei dem der Materialeinsatz für die Zierschicht minimiert wird und die optischen Eigenschaften der Zierschicht wenigstens annähernd ganz erhalten bleiben.

Weiterhin ist es Aufgabe der Erfindung, ein Verkleidungsteil zu Dekorationszwecken mit einer Zierschicht, zu schaffen, wobei eine wenigstens annähernd freie geometrische und optische Gestaltung des Verkleidungsteils möglich sein soll.

Erfindungsgemäß wird die Aufgabe durch das im kennzeichnenden Teil von Anspruch 1 genannte Verfahren und die im kennzeichnenden Teil von Anspruch 6 genannten Merkmale gelöst.

Das erfindungsgemäße Verfahren bietet den Vorteil, daß mit geringem Materialeinsatz des Materials für die Zierschicht ein maximaler optischer Effekt erreicht werden kann. Durch die Ober- und Unterform der Gießform wird die Zierschicht in idealer Weise in die, durch die jeweilige Gießform vorgegebene, dreidimensionale Form gebracht. Die dünne, auf einem flexiblen Stabilisierungsmaterial aufgebrachte Zierschicht kann durch die sich schließende Ober- bzw. Unterform in drei Raumrichtungen beliebig verformt werden. Durch die Schutzschicht wird die Zierschicht in ihrer vorgegebenen Form fixiert. Damit ergeben sich viele geometrische Gestaltungsmöglichkeiten für das Verkleidungsteil.

Die Erfinder haben dabei festgestellt, daß es bei dem spröden, in dünner Schicht bruchgefährdeten erfindungsgemäßen Material der dünnen Zierschicht zwar durchaus zu Brüchen entlang von Mikrostrukturen bzw. Kristallkanten kommen kann, aber daß in überraschender Weise der optische Gesamteindruck dadurch nicht entscheidend verändert wird. Die mikrofeinen Brüche, z.B. entlang der Kristallgrenzen bei kristallinen Materialien, werden durch die Schutzschicht verdeckt, so'daß keine Unebenheiten auf der Oberfläche des Verkleidungsteils erkennbar sind, und dadurch, daß die Kristalle bzw. die anorganischen Mikrostrukturen selbst nicht zerstört werden, bleiben die optischen Eigenschaften des anorganischen und/oder kristallinen Materials der dünnen Zierschicht praktisch vollkommen erhalten.

Von besonderem Vorteil ist hierbei das flexible Stabilisierungsmaterial, welches die Zierschicht auch dann noch zusammenhält wenn diese durch die beschriebenen Brüche ansonsten zerfallen würde. Ein weiterer Vorteil des Stabilisierungsmaterials liegt darin, daß es die Zierschicht stabilisiert und damit die Handhabung und den Transport der dünnen Zierschicht erheblich erleichtert.

Durch die transparente bzw. teiltransparente Ausführung der Deckschicht und des Trägerelements ist es möglich, durch eine Hinterleuchtung der Zierschicht (mit Lichtzuleitung z.B. durch ein Lichtleitkabel oder durch flächige Leuchtmittel, wie z.B. Elektroluminiszenz-Folien) weitere sehr vorteilhafte optische Effekte durch das Durchleuchten des für die Zierschicht eingesetzten Materials, z.B. Naturstein, zu erreichen.

In einer besonders günstigen Ausführungsform der Erfindung ist die der späteren Sichtseite des Verkleidungsteils zugewandte Fläche der Gießform in ihrer Oberflächenrauheit sehr fein ausgeführt, so daß der an dieser Fläche aushärtende transparente oder zumindest teiltransparente Kunststoff eine sehr glatte und gleichmäßige Oberfläche aufweist, womit auf eine Weiterbearbeitung der Sichtseite des Verkleidungsteils verzichtet werden kann.

Weitere Vorteile ergeben sich aus den Unteransprüchen und dem anhand der Zeichnungen nachfolgend prinzipmäßig erläuterten Herstellungsverfahren.

Es zeigt:
- Fig. 1: ein Verkleidungsteil für Dekorationszwecke mit einer Zierschicht aus Naturstein;
- Fig. 2: einen ersten Schritt des Verfahrens zur Herstellung eines Verkleidungsteiles für Dekorationszwecke;
- Fig. 3: einen zweiten Schritt des Verfahrens zur Herstellung des Verkleidungsteiles für Dekorationszwecke;
- Fig. 4: einen dritten Schritt des Verfahrens zur Herstellung des Verkleidungsteiles für Dekorationszwecke;
- Fig. 5: einen vierten Schritt des Verfahrens zur Herstellung des Verkleidungsteiles für Dekorationszwecke; und
- Fig. 6: einen fünften Schritt des Verfahrens zur Herstellung des Verkleidungsteiles für Dekorationszwecke.

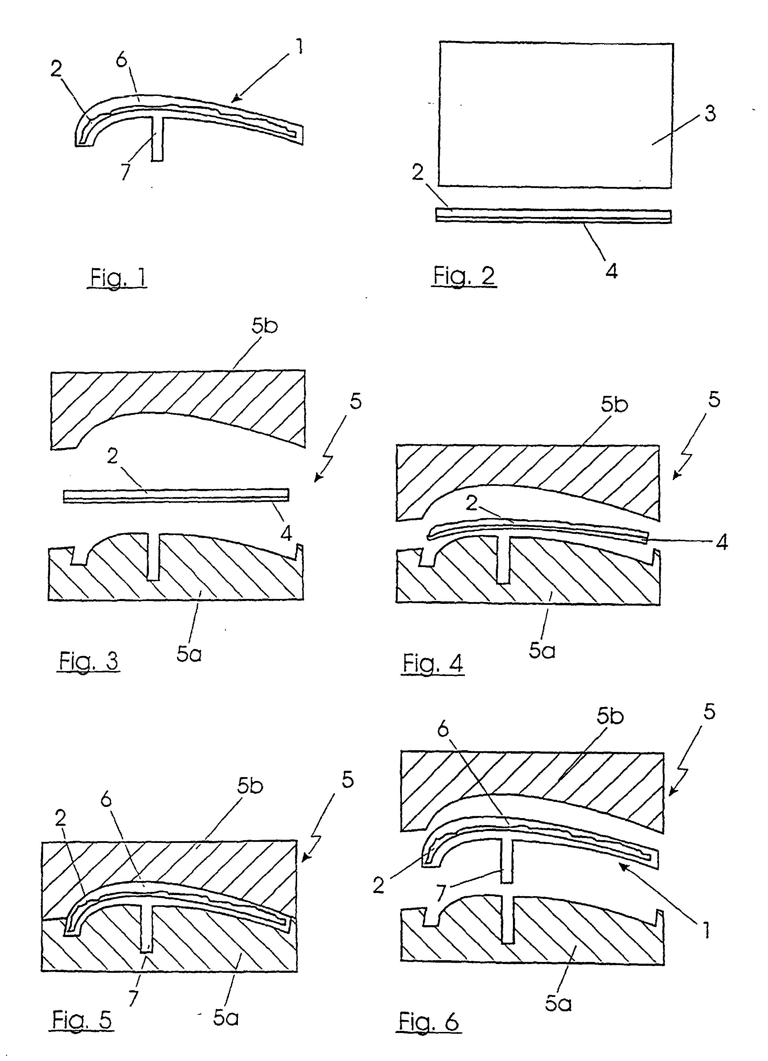

Im Ausführungsbeispiel soll nachfolgend das prinzipmäßige Herstellungsverfahren eines in Fig. 1 dargestellten Verkleidungsteils 1 für Dekorationszwecke mit einer dünnen Zierschicht 2 aus anorganischem und/oder kristallinem, in dünner Schicht bruchgefährdeten Material am Beispiel einer Zierschicht 2 aus Naturstein beschrieben werden.

Fig. 2 zeigt einen ersten Verfahrensschritt, in dem die dünne Zierschicht 2 von einem massiven Natursteinblock 3 abgetrennt wird. Das Abtrennen der Zierschicht 2 erfolgt dabei durch bekannte spanende Trennverfahren, wie z.B. Sägen. Um die Zierschicht 2 in einer Dicke von 0,3 bis 0,5 mm von dem Natursteinblock 3 abzutrennen bedarf es hochpräziser maschineller Einrichtungen, um eine gleichmäßige Schichtdicke zu erreichen. Prinzipiell ist dieses Verfahren jedoch bekannt und technisch beherrschbar. Die Zierschicht 2 wird während des Abtrennens durch ein flexibles, klebendes Stabilisierungsmaterial 4 gehaltert und kann mit diesem Stabilisierungsmaterial 4, z.B. mit einer flächigen Haltevorrichtung (nicht dargestellt) fixiert werden. Neben dem lösbaren Verkleben der Zierschicht 2 mit der Halteeinrichtung dient das Stabilisierungsmaterial 4 auch dazu, die Zierschicht 2 beim weiteren Transport und der Weiterverarbeitung am Zerbrechen und Auseinanderfallen zu hindern. Die Dicke von 0,3 bis 0,5 mm ist dabei geradezu ideal, da die Zierschicht 2 hier halbtransparent wird und sich somit für eine Gestaltungsmöglichkeit mit Durchleuchtung eignet, aber im Gegensatz zu noch dünneren Zierschichten 2 die natürlichen optischen Eigenschaften voll erhalten bleiben.

Fig. 3 zeigt den nachfolgenden Verfahrensschritt, bei dem der Verbund aus Stabilisierungsmaterial 4 und Zierschicht 2 in eine Unterform 5a einer Gießform 5 eingelegt wird. Das Stabilisierungsmaterial 4 ist dabei der Unterform 5a zugewandt. Alternativ dazu ist es jedoch auch denkbar, daß die Zierschicht 2 auf ihrer dem Stabilisierungsmaterial 4 abgewandten Oberfläche mit einem flexiblen Haltematerial (nicht dargestellt) verklebt und mit diesem Haltematerial in die Unterform 5a eingelegt wird, wobei das Stabilisierungsmaterial 4 dann entfernt wird. Als Haltematerial bzw. Stabilisierungsmaterial 4 sind dabei verschiedene Kleber denkbar, welche sich im weiteren Verlauf des Verfahrens unter Druck und Temperatur auflösen oder zumindest unsichtbar werden.

Alternativ dazu können als Stabilisierungsmaterial bzw. Haltematerial jedoch auch Faser oder Gitterstrukturen aus organischen Materialien oder Metallen eingesetzt werden, welche zumindest einseitig mit einer klebenden Schicht versehen sind, und welche bewußt beim fertigen Verkleidungsteil 1 für optische Effekte eingesetzt werden können.

In Fig. 4 ist erkennbar, daß im nächsten Verfahrensschritt eine Oberform 5b der Gießform 5 und die Unterform 5a der Gießform 5 aufeinander zubewegt werden. Die Gießform 5 wird dadurch geschlossen. Die Zierschicht 2, welche noch mit dem Stabilisierungsmaterial 4 oder dem Haltematerial (nicht dargestellt) versehen ist, wird dabei in eine von der Oberform 5b und der Unterform 5a der Gießform 5 vorgegebene geometrische Gestalt gebracht. Dabei kann es durchaus zu Brüchen entlang natürlicher, vorgegebener Kanten, z.B. Korn- oder Kristallgrenzen, kommen. Die optischen Eigenschaften der Zierschicht 1 werden dabei durch diese Brüche nur geringfügig beeinträchtigt. Die Unterform 5a kann dabei noch Halteelemente (nicht dargestellt) aufweisen, von welchen die Zierschicht 2 bzw. der Verbund aus Zierschicht 2 und Stabilisierungsmaterial 4 in seiner gewünschten Lage fixiert wird.

In Fig. 5 ist die geschlossene Gießform 5 erkennbar. Sie wird durch nicht dargestellte Angußkanäle mit einem transparenten Material ausgegossen. Das transparente oder zumindest teiltransparente Material kann z.B. eine transparent aushärtende Kunststoffverbindung sein. Das Stabilisierungsmaterial 4 bzw. das Haltematerial (nicht dargestellt) kann dabei von dem flüssigen transparenten Material in der Art umschlossen werden, daß das Haltematerial 4 optisch nicht auffällt oder daß es sich unter Einwirkung von Temperatur und Druck mit dem transparenten Material zu einer homogenen Einheit vermischt. Dabei wird die Zierschicht 2 komplett von dem transparenten Material umgossen, wobei nach dem Abkühlen eine Schutzschicht 6, an der späteren Sichtseite des Verkleidungsteiles 1, und ein Trägerelement 7 zur späteren Fixierung des Verkleidungsteils 1 entsteht.

In Fig. 6 ist erkennbar, daß nachfolgend die Gießform 5 geöffnet wird und das Verkleidungsteil 1 aus transparentem Material und der Zierschicht 2 kann zum endgültigen Aushärten und Abkühlen aus der Form entnommen werden. Die von der Oberform 5b gebildete sichtseitige Oberfläche des Verkleidungsteils 1 kann bei entsprechender Oberflächengestaltung der Oberform 5b, z.B. polierte Oberfläche, bereits in einer sehr guten Qualität vorliegen, so daß eine Weiterbearbeitung bzw. Fertigbearbeitung des Verkleidungsteils 1 nicht notwendig ist.

Für den Einsatz dieser Verkleidungsteile 1 bietet sich vor allem die Ausgestaltung von Innen- und Außenverkleidungen im Bereich der Fahrzeuggestaltung an. So können hier die bisher häufig in "Wurzelholzfurnier" ausgeführten Dekorelemente durch solche mit einer Zierschicht aus Naturstein ersetzt werden. Weitere, vielfältige Einsatzmöglichkeiten für die Verkleidungsteile 1 sind im architektonischen, innenarchitektonischen Bereich, bei der Herstellung von Schmuck und im künstlerischen Einsatz denkbar.

## Patentansprüche

1. Verfahren zur Herstellung eines Verkleidungsteils für Dekorationszwecke, insbesondere für die Gestaltung von Innen- und/oder Außenverkleidungsteilen bei Kraftfahrzeugen, mit einer dünnen Zierschicht aus einem anorganischen und/oder kristallinen, in dünner Schicht bruchgefährdetem Material, insbesondere Naturstein,
**gekennzeichnet durch**
folgende Verfahrensschritte:
1.1 auf die Oberfläche eines Blocks (3) aus anorganischem und/oder kristallinen Material wird ein flexibles, wenigstens teilweise transparentes Stabilisierungsmaterial (4) aufgebracht und zusammen mit einer dünnen Zierschicht (2) von dem Block (3) aus anorganischem und/oder kristallinen Material abgetrennt,
1.2 der Verbund aus Zierschicht (2) und Stabilisierungsmaterial (4) wird in eine Gießform (5) für das Verkleidungsteil (1) eingelegt,
1.3 **durch** ein Gegeneinanderbewegen einer Ober- (5b) und einer Unterform (5a) wird die Gießform (5) geschlossen, die Zierschicht (2) wird **dadurch** in eine gewünschte, dreidimensionale **durch** die Gießform (5) vorgegebene Gestalt verformt,
1.4 die Gießform (5) wird mit wenigstens annähernd transparentem Material ausgegossen und die Zierschicht (2) wird dabei in ihrer vorgegebenen Gestalt fixiert,
1.5 die Gießform (5) wird geöffnet und das fertige Verkleidungsteil (1) entnommen.

2. Verfahren nach Anspruch 1,
**dadurch gekennzeichnet, daß**
das Abtrennen des Verbunds aus Zierschicht (2) und flexiblen Stabilisierungsmaterial (4) von dem Block (3) aus anorganischem und/oder kristallinen Material durch ein mechanisches insbesondere spanendes Trennen erfolgt.

3. Verfahren nach Anspruch 1 oder 2,
**dadurch gekennzeichnet, daß**
die Zierschicht (2) während des Abtrennens durch das flexible Stabilisierungsmaterial (4) mit einer Haltevorrichtung lösbar verbunden wird.

4. Verfahren nach Anspruch 1, 2 oder 3,
**dadurch gekennzeichnet, daß**
beim Einlegen des Verbunds aus Zierschicht (2) und flexiblem Stabilisierungsmaterial (4) das Stabilisierungsmaterial (4) auf der der späteren Sichtseite abgewandten Seite zu liegen kommt und auf Halteelemente in der Unterform (5a) der Gießform (5) gelegt wird.

5. Verfahren nach einem der Ansprüche 1 bis 4,
**dadurch gekennzeichnet, daß**
die den sichtseitigen Oberflächen des Verkleidungsteils (1) gegenüber angeordneten Flächen der Oberform (5b) der Gießform (5) mit polierten Oberflächen versehen werden.

6. Verkleidungsteil für Dekorationszwecke, welches nach einem der Ansprüche 1 bis 5 hergestellt ist,
**dadurch gekennzeichnet, daß**
eine der Oberflächen der dünnen Zierschicht (2) mit einem flexiblen, wenigstens teilweise transparenten Stabilisierungsmaterial (4) versehen ist, wobei die Zierschicht (2) in drei Raumrichtungen in eine von einer ebenen Form abweichende Form verformt ist, und daß die Zierschicht (2) durch eine Schutzschicht (6) aus wenigstens teilweise transparentem Material in ihrer Form fixiert ist.

7. Verkleidungsteil nach Anspruch 6,
**dadurch gekennzeichnet, daß**
die Zierschicht (2) eine Dicke von 0,1 bis 1,0 mm, idealerweise 0,3 bis 0,5 mm aufweist.

8. Verkleidungsteil nach Anspruch 6 oder 7,
**dadurch gekennzeichnet, daß**
die Zierschicht (2) auf einem Trägerelement (7) aus wenigstens teilweise transparentem Material angeordnet ist.

9. Verkleidungsteil nach Anspruch 6, 7 oder 8,
**dadurch gekennzeichnet, daß**
das Trägerelement (7) und die Schutzschicht (6) einstückig ausgebildet sind, wobei die Zierschicht (2) von dem Trägerelement (7) und der Schutzschicht wenigstens annähernd ganz umschlossen wird.

10. Verkleidungsteil nach einem der Ansprüche 6 bis 9,
**dadurch gekennzeichnet, daß**
die sichtseitige Oberfläche der Schutzschicht (6) wenigstens annähernd parallel zu der sichtseitigen Oberfläche der Zierschicht (2) angeordnet ist.

11. Verkleidungsteil nach einem der Ansprüche 6 bis 10,
**dadurch gekennzeichnet, daß**
das Stabilisierungsmaterial (4) eine gitterartige Struktur aufweist.

## Claims

1. A process for the manufacture of a trim component for decorative purposes, in particular for the design of interior and/or exterior trim components in motor vehicles, with a thin decorative layer consisting of an inorganic and/or crystalline material which is susceptible to fracture in thin layers, in particular natural stone,
**characterised by** y
the following process steps:
1.1 a flexible, at least partially transparent stabilising material (4) is applied to the surface of a block (3) of inorganic and/or crystalline material and separated from the block (3) of inorganic and/or crystalline material together with a thin decorative layer (2),
1.2 the composite formed by the decorative layer (2) and the stabilising material (4) is placed in a casting mould (5) for the trim component,
1.3 by moving an upper (5b) and a lower part (5a) towards each other the casting mould (5) is closed, thereby forming the decorative layer (2) into a desired, three-dimensional shape determined by the casting mould (5),
1.4 the casting mould (5) is cast with at least almost transparent material and the decorative layer (2) is thus fixed in its predetermined shape,
1.5 the casting mould (5) is opened and the finished trim component (1) is removed.

2. A process in accordance with claim 1,
**characterised in that**
the composite made of the decorative layer (2) and the flexible stabilising material (4) is separated from the block (3) made of inorganic and/or crystalline material by means of mechanical separation, in particular using a cutting process.

3. A process in accordance with claim 1 or 2,
**characterised in that**
during separation, the decorative layer (2) is attached to a holding device in such a manner that it can be detached by means of the flexible stabilising material (4).

4. A process in accordance with claim 1, 2 or 3,
**characterised in that**
during the insertion of the composite formed of the decorative layer (2) and the flexible stabilising material (4), the flexible stabilising material (4) is placed against the side facing away from the side which is subsequently visible and placed on holding elements in the lower form (5a) of the casting mould (5).

5. A process in accordance with one of claims 1 to 4,
**characterised in that**
the faces of the upper part (5b) of the casting mould (5) positioned opposite the visible surfaces of the trim component (1) are provided with polished surfaces.

6. A trim component for decoration purposes which is manufactured in accordance with one of claims 1 to 5,
**characterised in that**
one of the surfaces of the thin decorative layer (2) is provided with a flexible, at least partly transparent stabilising material (4), the decorative layer (2) being formed in three directions in space in a shape which differs from a plane form, and that the decorative layer (2) is fixed in its shape by means of a protective layer (6) made of at least partially transparent material.

7. A trim component in accordance with claim 6,
**characterised in that**
the decorative layer (2) has a thickness of 0.1 to 1.0 mm, ideally 0.3 to 0.5 mm.

8. A trim component in accordance with claim 6 or 7,
**characterised in that**
the decorative layer (2) is positioned on a carrier element (7) made of at least partially transparent material.

9. A trim component in accordance with claim 6, 7 or 8,
**characterised in that**
the carrier element (7) and the protective layer (6) are made as one piece, the decorative layer (2) being at least almost entirely enclosed by the carrier element (7) and the protective layer (6).

10. A trim component in accordance with one of claims 6 to 9,
**characterised in that**
the visible surface of the protective layer (6) is positioned at least approximately parallel to the visible surface of the decorative layer (2).

11. A trim component in accordance with one of claims 6 to 10,
**characterised in that**
the stabilising material (4) has a grid-like structure.

## Revendications

1. Procédé de fabrication d'une pièce de revêtement dans un but décoratif, en particulier pour la configuration de pièces intérieures et/ou extérieures de revêtement sur véhicules automobiles, comportant une mince couche décorative en matière inorganique et/ou cristalline, sujette à la rupture lorsqu'elle se présente en couche mince, en particulier la pierre naturelle,
**caractérisé par** les
étapes suivantes de procédé :
1.1 une matière stabilisatrice (4) flexible, au moins en partie transparente, est appliquée à la surface d'un bloc (3) en matière inorganique et/ou cristalline et, avec une couche décorative mince (2), est séparée du bloc (3) en matière inorganique et/ou cristalline,
1.2 le composé constitué de la couche décorative (2) et de la matière stabilisatrice (4) est introduit dans un moule (5) pour la pièce de revêtement (1),
1.3 le moule (5) est fermé par un déplacement l'un vers l'autre d'un moule supérieur (5b) et d'un moule inférieur (5a), la couche décorative (2) est, de ce fait, formée en une configuration souhaitée, tridimensionnelle, prédéterminée par le moule (5),
1.4 le moule (5) est rempli de matière au moins presque transparente et la couche décorative (2) est ainsi fixée dans sa configuration prédéterminée,
1.5 le moule (5) est ouvert et la pièce de revêtement (1) finie est extraite.

2. Procédé selon la revendication 1,
**caractérisé en ce que** la séparation entre le composé constitué de la couche décorative (2) et de la matière stabilisatrice (4) et le bloc (3) de matière inorganique et/ou cristalline est réalisée par une séparation mécanique, en particulier par enlèvement de copeaux.

3. Procédé selon la revendication 1 ou 2,
**caractérisé en ce que** pendant la séparation, la couche décorative (2) est reliée, détachable, par la matière stabilisatrice (4) flexible avec un dispositif de maintien.

4. Procédé selon la revendication 1, 2 ou 3,
**caractérisé en ce que** lors de l'introduction du composé constitué de la couche décorative (2) et de la matière stabilisatrice (4) flexible, la matière stabilisatrice (4) vient reposer sur la face dirigée vers le côté visible ultérieurement et se pose sur des éléments de maintien dans le moule inférieur (5a) du moule (5).

5. Procédé selon l'une quelconque des revendications 1 à 4,
**caractérisé en ce que** les faces du moule supérieur (5b) du moule (5) disposées face aux surfaces côté visible de la pièce de revêtement (1) sont munies de surfaces polies.

6. Pièce de revêtement dans un but décoratif, qui est fabriquée selon l'une quelconque des revendications 1 à 5, **caractérisée en ce que** l'une des surfaces de la couche décorative (2) mince est munie d'une matière stabilisatrice (4) au moins en partie transparente, dans laquelle la couche décorative (2) est formée dans trois directions spatiales en une forme différente d'une forme plane, et **en ce que** la couche décorative (2) est fixée dans sa forme par une couche protectrice (6) en matière au moins en partie transparente.

7. Pièce de revêtement selon la revendication 6,
**caractérisée en ce que** la couche décorative (2) présente une épaisseur de 0,1 à 1,0 mm, idéalement de 0,3 à 0,5 mm.

8. Pièce de revêtement selon la revendication 6 ou 7,
**caractérisée en ce que** la couche décorative (2) est disposée sur un élément support (7) en matière au moins en partie transparente.

9. Pièce de revêtement selon la revendication 6, 7 ou 8,
**caractérisée en ce que** l'élément support (7) et la couche protectrice (6) sont configurées en un seul bloc, la couche décorative (2) étant entourée, au moins presque entièrement, par l'élément support (7) et la couche protectrice.

10. Pièce de revêtement selon l'une quelconque des revendications 6 à 9,
**caractérisée en ce que** la surface côté visible de la couche protectrice (6) est disposée au moins presque parallèlement à la surface côté visible de la couche décorative (2).

11. Pièce de revêtement selon l'une quelconque des revendications 6 à 10,
**caractérisée en ce que** la matière stabilisatrice (4) présente une structure du type grille.
